# EUROPÄISCHE PATENTSCHRIFT

(11) **EP 0 557 918 B1**
(45) Veröffentlichungstag und Bekanntmachung des Hinweises auf die Patenterteilung: **03.07.1996**
(21) Anmeldenummer: 93102729.6
(22) Anmeldetag: 20.02.1993
(51) Int. Cl.: F02F 11/00, F16J 15/12

(54) **Flachdichtung für Verbrennungskraftmaschinen**
Gasket for internal combustion engine
Joint pour moteur à combustion interne

(30) Priorität: 26.02.1992 DE 4205824
(43) Veröffentlichungstag der Anmeldung: 01.09.1993
(73) Patentinhaber: Elring Klinger GmbH, 72581 Dettingen (DE)
(72) Erfinder: Walter, Gerhard, W-7433 Dettingen (DE); Amann, Erich, W-7407 Rottenburg (DE)
(74) Vertreter: Hoeger, Stellrecht & Partner

(56) Entgegenhaltungen:
- EP-A- 0 164 940
- EP-A- 0 306 750
- EP-A- 0 310 528
- EP-A- 0 394 145
- FR-A- 2 013 726
- FR-A- 2 319 824
- FR-A- 2 424 455
- FR-A- 2 446 970
- FR-E- 88 028
- US-A- 4 213 620
- PATENT ABSTRACTS OF JAPAN vol. 12, no. 61 (M-671)(2908) 24. Februar 1988 & JP-A-62 206 258 (SANSHIN IND CO LTD)

## Beschreibung

Die Erfindung betrifft eine Flachdichtung für Verbrennungskraftmaschinen für die Montage zwischen sich gegenüberliegenden Flächen eines Motorblocks und eines Zylinderkopfes mit einer Trägerplatte, welche zu den Brennräumen des Motorblocks ausgerichtete Durchbrüche sowie Durchbrüche für den Durchtritt von Kühlflüssigkeits- und Schmiermittelströmen umfaßt, mit Brennraumeinfassungen und hiervon verschiedenen Dichtungselementen aus Elastomer-Material, welchletztere Abschnitte aufweisen, welche die Kühlflüssigkeitsströme und die Schmiermittelströme voneinander trennen und dichtend umgeben, sowie mit einer Abstützung zur Begrenzung der Kompression der Dichtungselemente aus Elastomermaterial, welche den Abstand zwischen den sich gegenüberliegenden Flächen von Motorblock und Zylinderkopf definiert, wobei die Trägerplatte im wesentlichen ausschließlich als Halterung der einzelnen Komponenten der Flachdichtung in der Dichtungsebene in einem für die Montage vorgegebenen Abstand voneinander ausgebildet ist.

Solche Flachdichtungen sind aus der FR-A 23 19 824 bekannt, bei der die Brennraumeinfassungen und Schraubendurchgangslöcher mit Metallösen eingefaßt sind, welche inkompressibel sind und den Zylinderkopf am Motorblock abstützen und so eine zu starke Verpressung der Elastomer-Dichtelemente verhindern. Hier wird empfohlen, die Dicke der Elastomer-Dichtelemente 15 bis 30% größer als die der Abstützung zu wählen.

Bei herkömmlichen Flachdichtungen der eingangs beschriebenen Art, kurz Zylinderkopfdichtungen genannt, ist es notwendig, die gesamten Einzelteile der Dichtung auf den jeweils zu bestückenden Motor abzustimmen. Dies bedeutet ein jeweils von Grund auf neues Design der Dichtungen, verbunden mit dem entsprechenden Aufwand in der Konstruktion und in der Fertigungsvorbereitung.

Andere herkömmliche Zylinderkopfdichtungen weisen eine durchgehende Dichtungsfläche auf, unterbrochen von Durchbrüchen im Bereich der Brennräume der Motoren und den Durchlässen für Kühlmittelströme, Schmiermittelströme und Schraublöchern.

Um eine ausreichende Dichtigkeit der Zylinderkopfdichtung zu gewährleisten, ist es dabei notwendig, daß die Dichtungsmasse großflächig an den sich gegenüberliegenden Oberflächen des Motorblocks und des Zylinderkopfs anliegen, wobei um eine ausreichende Pressung der Dichtung zu erhalten, entsprechend hohe Kräfte bei der Verschraubung aufgewendet werden müssen. Dies gilt insbesondere für Weichstofflachdichtungen, wie sie aus der EP-A-0 164 940 bekannt sind.

Besondere Probleme bieten insbesondere zwei Motorkonstruktionen, nämlich die sogenannten Open-Deck-Konstruktionen, bei denen die Zylinderlaufbüchsen im wesentlichen frei in dem Motorengehäuse angeordnet sind, und für die Zylinderkopfdichtung nur geringe Auflageflächen bieten. Das bei den Open-Deck-Motoren oben offene Kurbelgehäuse kann während dem Motorbetrieb große Relativbewegungen ausführen, was ganz besondere Anforderungen an die Zylinderkopfdichtungen stellt.

Die andere sehr problematische Motorenkonstruktion betrifft Dieselmotoren mit Wirbelkammereinsätzen, bei denen sich aufgrund der zuzulassenden Toleranzen in der Umgebung des Wirbelkammereinsatzes zur benachbarten Zylinderkopfoberfläche stufig abgesetzte Flächenbereiche ergeben, bei denen es zu einer besonders starken Beanspruchung der Zylinderkopfdichtung bzw. der Dichtungsmasse kommt.

Wurde die Dichtung in bezug auf eine Problemzone, beispielsweise die Brennraumeinfassung, optimiert, verlangte dies regelmäßig Kompromisse bei der Ausgestaltung anderer Dichtungsbereiche, beispielsweise den Flüssigkeitsdurchgängen, insbesondere im Hinterland der Brennräume. Dies bedeutet ferner, daß die Trägerplatte weder am Motorblock noch am Zylinderkopf großflächig dichtend anliegt.

Aufgabe der Erfindung ist es, eine Flachdichtung vorzuschlagen, die bei prinzipiell gleichem Aufbau leicht an unterschiedliche Anforderungen von seiten der zu bestückenden Verbrennungskraftmaschinen anzupassen ist und welche insbesondere auch die Probleme bei den besonders hohe Anforderungen an die Zylinderkopfdichtung stellenden Motorenkonstruktionen löst.

Diese Aufgabe wird bei einer Flachdichtung der eingangs beschriebenen Art erfindungsgemäß durch die Merkmale des Anspruchs 1 gelöst.

Dieses neue Konzept des Aufbaus einer Flachdichtung beinhaltet, daß die Trägerplatte keine Dichtungsfunktion mehr übernimmt, wie dies bislang der Fall war, sondern nur noch als Montagehilfe fungiert, die sicherstellt, daß die einzelnen Komponenten der Flachdichtung, nämlich insbesondere die Brennraumeinfassungen sowie die Dichtelemente, die die Kühlwasserströme und Schmiermittelströme umschließen und voneinander und zum Brennraum hin abdichten, in der korrekten Position zwischen Motorblock und Zylinderkopf zu liegen kommen.

Mit der Definition, daß die Trägerplatte im wesentlichen ausschließlich der Halterung der einzelnen Komponenten dient, ist vor allem gemeint, daß die Trägerplatte keine Dichtungsfunktion übernimmt, insbesondere nicht im Hinterland der Brennräume.

Dies schließt jedoch nicht aus, daß der Trägerplatte außer der Haltefunktion weitere Funktionen übertragen werden, wie beispielsweise der Drosselung oder Kalibrierung von Flüssigkeitsströmen.

Bei dieser Grundkonzeption lassen sich dann unterschiedliche Brennraumeinfassungen bzw. Dichtungselemente mit der Trägerplatte kombinieren, so daß man einer Vielzahl unterschiedlicher Anforderungen mit demselben Flachdichtungstyp gerecht werden kann. Insbesondere können auch die Elastomermaterialien - speziell für Kühlflüssigkeits- bzw. Schmiermitteldurchbrüche angepaßt werden.

Bevorzugt umfassen die Brennraumeinfassungen einen metallischen Einfassungsring, der den Brennraum gegenüber der restlichen Dichtung abgrenzt und dichtend abtrennt.

Der metallische Ring kann beispielsweise aus massivem Material hergestellt sein und trägt dann an seiner Ober- oder Unterseite eine ringsumlaufende Nut. Die umlaufende Nut verleiht dem massiven Ring eine gewisse Nachgiebigkeit, so daß sich der Ring bei der Montage etwas verformen kann und Toleranzen an den Oberflächen von Motorblock und Zylinderkopf ausgleichen kann.

Ferner kann der Ring ein U-förmiges, auf der dem Brennraum abgewandten Seite offenes Profil aufweisen, wobei hierfür vorzugsweise federndes metallisches Material bei der Herstellung des Einfassungsringes verwendet wird.

Bei einer der möglichen Ausführungsformen ist der metallische Ring mit einem der Schenkel des U-förmigen Profiles mit der Trägerplatte über einen abgekröpften Teil verbunden.

Der metallische Ring kann insbesondere mit der Trägerplatte einstückig ausgebildet sein, d.h. die Durchbrüche im Bereich des Brennraumes werden bei der Herstellung der Trägerplatte etwas kleiner gehalten, wobei dann in einem weiteren Verfahrensschritt, der in das Brennrauminnere weisende Rand der Trägerplatte umgebördelt wird und so den metallischen Einfassungsring mit dem U-förmigen Profil bildet. Hierbei kann eine Abkröpfung der Trägerplatte beim Übergang zum Einfassungsring notwendig sein, um den Einfassungsring symmetrisch zur Trägerplattenebene anzuordnen.

Eine alternative Befestigungsmöglichkeit für den Einfassungsring besteht darin, daß der Ring radial abstehende Laschen erhält, die im eingesetzten Zustand mit dem Trägerplattenmaterial überlappen, der Halterung der Einfassung an der Trägerplatte dienen und mit dieser beispielsweise punktförmig verschweißt oder geklebt sind.

Die Brennraumeinfassung kann bei allen bislang beschriebenen Arten einen radial nach außen abstehenden Randbereich umfassen, welcher gegebenenfalls einstückig als Fortsetzung eines Schenkels des U-förmigen Profils ausgebildet ist. Diese erweiterten, nach außen abstehenden Randbereiche der Brennraumeinfassung dienen zur Überlappung mit besonders beanspruchten Bereichen des Zylinderkopfes, wie z.B. der Abdeckung einer Wirbelkammer bei Dieselmotoren im Zylinderkopf.

Das U-förmige Profil des Einfassungsringes kann mit einer Weichstoffdichtungsmasse gefüllt sein. Hierbei kommt eine vollständige oder teilweise Füllung in Frage. Eine mögliche Variante beinhaltet eine zusätzliche Abdichtung mittels Weichstoffmasse von Trägerplattenbereichen um den Einfassungsring herum.

Die Brennraumeinfassung kann ferner einen metallischen Einsatzring aus gegebenenfalls gelochtem Flachmaterial umfassen, wobei der Einsatzring konzentrisch zum Einfassungsring und zwischen den Schenkeln des U-förmigen Profiles angeordnet ist. Der metallische Einsatzring schließt ein Füllen des U-förmigen Profiles mit Weichstoffdichtungsmaterial nicht aus sondern läßt sich problemlos damit kombinieren.

Der Einsatzring kann nach außen abstehende Laschen umfassen, welche dann zur Befestigung der Brennraumeinfassung an der Trägerplatte dienen können.

Der Einsatzring kann ferner zur Versteifung der Brennraumeinfassung in seinem mit dem Einfassungsring überlappenden Teil eine ringsumlaufende Sicke umfassen. Diese ist dann benachbart zu dem brennraumseitigen Ende des U-förmigen Profils angeordnet.

Der Einsatzring im Einfassungsring kann zusätzlich noch von metallischen Lagen sandwichartig umgeben sein.

Ferner kann der metallische Einsatzring, zumindest im Bereich der Überlappung mit dem U-förmigen Profil des Einfassungsringes, in Weichstoffdichtungsmaterial eingebettet sein.

Bei einer bevorzugten Ausführungsform ist das U-förmige Profil des Einfassungsringes im wesentlichen vollständig von dem Weichstoffdichtungsmaterial ausgefüllt.

Ferner kann in speziellen Fällen vorteilhaft vorgesehen sein, daß das U-förmige Profil mit einer Graphitfüllung, insbesondere expandiertem Graphit, zumindest teilweise gefüllt ist.

Die Graphitfüllung kann dabei in Ringform vorliegen, beispielsweise mit kreisrundem Querschnitt und benachbart zum geschlossenen Ende des U-förmigen Profils angeordnet sein.

Auch für die Elastomer-Dichtungselemente ergibt sich eine große Anzahl an Variationsmöglichkeiten, wobei aufgrund des erfindungsgemäßen Baukonzeptes der Flachdichtung die Materialauswahl für die Elastomer-Dichtungselemente unabhängig davon getroffen werden kann, was für die Brennraumeinfassungen an Material verwendet werden muß.

Dies bedeutet, daß bei jeder Flachdichtung sowohl im Bereich der Brennraumeinfassung als auch für die Elastomer-Dichtungselemente eine optimale Materialauswahl getroffen werden kann, ohne daß auf die jeweils andere Komponente Rücksicht genommen werden muß oder diese in ihrer Funktionsfähigkeit auch nur irgendwie beeinträchtigt würde.

Die Elastomer-Dichtungselemente werden vorzugsweise rippenförmig an der Ober- und Unterseite der Trägerplatte aufgebracht, insbesondere in Form einer raupenförmigen Spur aufgespritzt, aufgeklebt oder mechanisch befestigt. Die Trägerplatte kann im Bereich des Verlaufs der Dichtungselemente Perforationen oder dergleichen aufweisen, die eine mechanische Verbindung der Dichtungselemente an der Ober- und Unterseite erlauben (über Brücken aus Elastomermaterial).

Ferner ist es möglich, die Elastomer-Dichtungselemente nicht auf der Trägerplatte aufzubringen sondern an deren Rand anzuspritzen, so daß diese gegebenenfalls einen Randbereich der Trägerplatte in geringem Umfang umgreifen. Das Anspritzen der Elastomer-Dichtungselemente an die Trägerplatte ist deshalb möglich, weil keine großen Haltekräfte notwendig sind, da die Trägerplatte, wie bereits zuvor erwähnt, ja im wesentlichen nur die Funktion einer Montagehilfe besitzt und während der weiteren Lebensdauer der Zylinderkopfdichtung im eingebauten Zustand diesbezüglich im wesentlichen ohne Funktion ist. Dasselbe gilt übrigens für die Halterung der Brennraumeinfassungen, da diese im eingebauten Zustand fest an ihrer Position verbleiben und nicht mehr eine Fixierung durch die Trägerplatte benötigen.

Vorzugsweise weisen die Elastomer-Dichtungselemente die Form einer Doppelrippe auf, mit der eine besonders effiziente und sichere Abdichtung der einzelnen Bereiche voneinander sichergestellt werden kann.

Es sei an dieser Stelle darauf hingewiesen, daß es nicht unbedingt notwendig ist, jeden Kühlmitteldurchlaß in der Trägerplatte ringsum mit einem elastomeren Dichtungselement abzudichten, vielmehr kann es ausreichend sein, zum einen eine Abdichtung des gesamten Motorblockes nach außen durch eine ringsumlaufende Spur des Dichtungselementes abzudichten und im Inneren für eine exakte Trennung zwischen Kühlmittel- und Schmiermittelströmen zu sorgen. Eine Abdichtung beispielsweise der Kühlmittelströme vom Brennraum kann in vielen Fällen bereits durch die Brennraumeinfassungen erfolgen, bei denen ja eine Gasdichtheit sichergestellt sein muß und die demzufolge auch eine flüssigkeitsdichte Dichtwirkung aufweisen. In diesen Fällen kann die Zahl der Elastomer-Dichtungselemente minimal gehalten werden.

Aufgrund der durch die erfindungsgemäße Konzeption geschaffenen Möglichkeit, die Fläche der Dichtungselemente und der Brennraumeinfassungen, die gegen die Oberflächen des Motorblocks und des Zylinderkopfes anliegen, äußerst gering zu halten im Vergleich zu den großflächigen, bisher bekannten Dichtungen, läßt sich die Schraubenkraft, mit der der Zylinderkopf an den Motorblock angepreßt werden muß, deutlich reduzieren, insbesondere weil die Elastomerdichtelemente bereits bei kleinen Preßdrücken eine ausreichende Dichtigkeit erzielen.

Durch die weitere Maßnahme der Erfindung, nach der an der Trägerplatte in Bereichen benachbart zu Schraublöchern bzw. in Bereichen, die benachbart zu Schraubverbindungen zwischen Zylinderkopf und Motorblock zu liegen kommen, üblicherweise in peripheren Bereichen der Trägerplatte, Abstützelemente anzuordnen sind, welche einen Abstand zwischen den sich gegenüberliegenden Flächen von Motorblock und Zylinderkopf definieren, wird sichergestellt, daß der Zylinderkopf und der Motorblock im peripheren Bereich einen definierten Abstand einnehmen ebenso wie im Bereich der Brennraumeinfassungen, wo der Abstand zwischen den beiden Motorenteilen durch die (verpreßte) Brennraumeinfassung definiert wird. Die Schraubenkräfte können im wesentlichen zur Verpressung der Brennraumeinfassung zur Verfügung gestellt werden, wo sie auch für eine entsprechende Gasdichtheit benötigt werden, und es reichen für einen dichten Abschluß der Kühlmittelströme und Schmiermittelströme bereits geringere Kräfte zur Verformung der Elastomer-Dichtungselemente aus, um hier eine durchgehende Anlage der Dichtungselemente an den jeweiligen Oberflächen des Zylinderkopfes und des Motorblockes zu erzielen. Erfindungsgemäß definieren die Abstützelemente der Abstützung einen Abstand derart, daß dieser im wesentlichen die Dicke der Brennraumeinfassungen im ideal verpreßten Zustand vorgibt und gleichzeitig etwas geringer ist als die Dicke der Flachdichtung an den mit Elastomer-Dichtelementen beaufschlagten Bereichen.

Zum einen wird so ein ausreichender Verpressungsdruck auf die Brennraumeinfassungen bei der Montage ausgeübt und andererseits jedoch sichergestellt, daß die Elastomer-Dichtelemente keiner zu starken Verformung unterliegen und deshalb ihre optimalen Dichteigenschaften auch bei schwierigen Montagebedingungen beibehalten können.

Während bereits das erfindungsgemäße Grundkonzept der erfindungsgemäßen Flachdichtung eine Reduzierung der Schraubenkräfte um bis zu 40 % zuläßt und damit Verzugsprobleme deutlich mindert, sorgt das zusätzliche Anbringen von Abstützelementen an der Trägerplatte dafür, daß selbst bei dieser deutlich verringerten Schraubenkraft kein Verzug der Bauteile durch eine ungleiche Beanspruchung auftreten kann. Da bereits die Reduzierung der Schraubenkräfte zu einer deutlichen Verzugsreduzierung führt, sind bei der erfindungsgemäßen Zylinderkopfdichtung eine deutliche Reduzierung der Blow-by-Probleme, des Ölverbrauches, Verschleißes etc. festzustellen. Ferner wird entweder gar kein oder ein nur sehr geringer Setzverlust und damit ein gegen Null gehender dichtungsbedingter Schraubenkraftabfall während der Lebensdauer einer Zylinderkopfdichtung beobachtet.

Die Abstützelemente können aus Flachmaterial hergestellt sein und als getrennte Teile an der Ober- und Unterseite der Trägerplatte befestigt sein. Alternativ hierzu und selbstverständlich in Kombination mit anderen Ausführungsformen der Abstützelemente kann vorgesehen sein, daß das Trägerplattenmaterial in peripheren Bereichen ein- oder mehrfach auf sich selbst zurückgefaltet ist und mit der Trägerplatte selbst über einen gekröpften Bereich verbunden ist. Insbesondere bei metallischen Trägerplatten ist hier eine einfache Möglichkeit der Ausbildung von Abstützelementen gegeben, ohne daß zusätzliche Arbeitsgänge zur Befestigung der Abstützelemente notwendig wären.

Eine weitere Alternative für die Ausbildung der Abstützelemente liegt darin, diese aus zu U-Profilen gebogenen Blechen zu fertigen und auf den peripheren Rand der Trägerplatte aufzusetzen. Häufig reicht bereits die Klemmwirkung der U-Profilbleche aus, und weitere Befestigungsmaßnahmen können entfallen.

Ferner können die Abstützelemente als massive quaderförmige Teile ausgebildet sein und über Elastomerbrücken, die gegebenenfalls gleichzeitig als Dichtungselemente ausgebildet sein können, am Trägerplattenrand gehalten werden. Auch an dieser Stelle wird wieder deutlich, daß die Trägerplatte für die Abstützelemente keine andere Funktion erfüllt als die eines Montagehilfsmittels, das sicherstellt, daß die einzelnen Komponenten der Dichtung, wie Brennraumeinfassung, Dichttelemente und Abstützelemente an den exakt vorgesehenen Bereichen auf der Oberfläche des Motorblocks bzw. des Zylinderkopfs zur Anlage kommen, während im montierten Zustand die Trägerplatte im wesentlichen ihre Funktion eingebüßt hat.

Hieraus wird auch deutlich, daß die Trägerplatte aus einer Vielzahl von möglichen Materialien ausgesucht werden kann und beispielsweise aus einem gelochten oder einem ungelochten Blech gefertigt sein kann. Selbstverständlich ist auch vorstellbar, daß die Trägerplatte aus anderen Materialien, wie z.B. aus Metallgeweben, Kunststoffen, Dichtungspappen, etc. hergestellt sein kann. Im Falle der Verwendung von Kunststoffen ist vorstellbar, die Trägerplatte einstückig mit den Dichtungselementen auszubilden, wobei hier für die Trägerplatte und die Dichtungselemente dasselbe Material verwendet werden kann.

Bezüglich der Anordnung der Abstützelemente sollte vorzugsweise sichergestellt sein, daß diese außerhalb der mit Kühlflüssigkeit und/oder Schmiermittel in Kontakt stehenden Bereichen der Trägerplatte angeordnet sind.

Bei einer besonders bevorzugten Ausführungsform der Erfindung können Brennraumeinfassung und Abstützelemente einstückig ausgebildet sein. Mit einem Stanzvorgang erhält man dann die Brennraumeinfassungen sowie die Abstützelemente als ein Bauteil. Vorteile werden insbesondere bei der Montage erzielt, weil gegebenenfalls alle Brennraumeinfassungen zusammen mit den Abstützelementen als ein Bauteil gehandhabt werden können.

Diese und weitere Vorteile der Erfindung werden im folgenden anhand der Zeichnung noch näher erläutert. Es zeigen im einzelnen:
- Fig. 1: eine teilweise Draufsicht auf eine erfindungsgemäße Flachdichtung;
- Fig. 2: eine teilweise Draufsicht auf eine weitere Ausführungsform einer erfindungsgemäßen Flachdichtung;
- Fig. 3: eine teilweise Draufsicht auf eine weitere Ausführungsform einer erfindungsgemäßen Flachdichtung;
- Fig. 4: eine Schnittansicht längs Linie 4-4 in Fig. 1;
- Fig. 5: eine Schnittansicht einer Variante einer Brennraumeinfassung einer erfindungsgemäßen Zylinderkopfdichtung;
- Fig. 6: eine Schnittansicht einer Variante einer Brennraumeinfassung einer erfindungsgemäßen Zylinderkopfdichtung;
- Fig. 7: eine Schnittansicht längs Linie 7-7 in Fig. 2 durch eine Brennraumeinfassung einer erfindungsgemäßen Zylinderkopfdichtung;
- Fig. 8: eine Schnittansicht einer Variante einer Brennraumeinfassung einer erfindungsgemäßen Zylinderkopfdichtung;
- Fig. 9: eine Schnittansicht längs Linie 9-9 in Fig. 1 durch ein Elastomer-Dichtungselement einer erfindungsgemäßen Zylinderkopfdichtung;
- Fig. 10: eine Schnittansicht durch eine Variante einer Elastomer-Dichtung einer erfindungsgemäßen Zylinderkopfdichtung;
- Fig. 11: eine Schnittansicht durch ein Elastomer-Dichtungselement, angespritzt an ein Abstützelement einer erfindungsgemäßen Zylinderkopfdichtung;
- Fig. 12: eine Schnittansicht durch ein Elastomer-Dichtungselement sowie benachbart angeordnetes Abstützelement auf einer Trägerplatte einer erfindungsgemäßen Zylinderkopfdichtung;
- Fig. 13: eine Schnittansicht durch einen Randbereich einer erfindungsgemäßen Zylinderkopfdichtung mit einem Elastomer-Dichtungselement und einem Abstützelement;
- Fig. 14: eine Schnittansicht durch ein Abstützelement und ein angespritztes Dichtungselement am peripheren Rand einer Trägerplatte einer erfindungsgemäßen Zylinderkopfdichtung;
- Fig. 15: eine Schnittansicht einer weiteren Variante eines Abstützelementes und angespritzem Dichtungselement einer erfindungsgemäßen Zylinderkopfdichtung;
- Fig. 16: eine Schnittansicht längs Linie 16-16 in Figur 3;
- Fig. 17: eine Schnittansicht analog der Fig. 16 von einer alternativen Ausführungsform; und
- Fig. 18: eine Schnittansicht entsprechend der Linie 18-18 in Fig. 1.

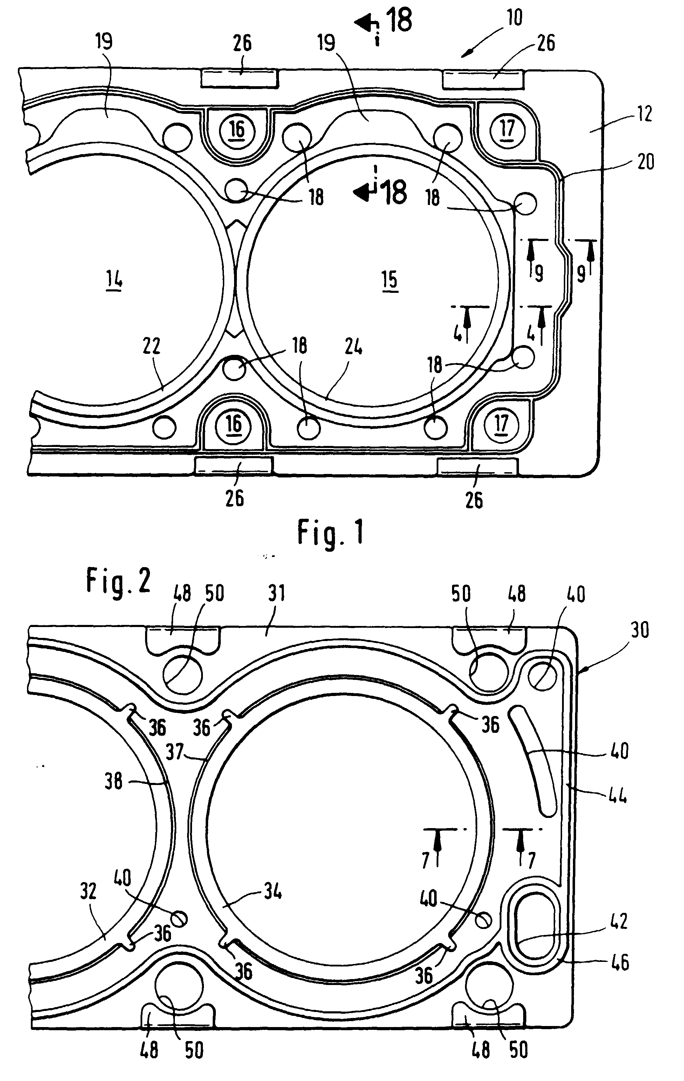

Fig. 1 zeigt eine teilweise Ansicht einer mit dem Bezugszeichen 10 versehenen Flachdichtung für Verbrennungsmotoren, im folgenden kurz Zylinderkopfdichtung genannt, welche zwischen zwei sich gegenüberliegenden Flächen eines Motorblocks und eines Zylinderkopfes montiert wird.

Die erfindungsgemäße Zylinderkopfdichtung 10 umfaßt eine Trägerplatte 12, welche im wesentlichen auf die Außenkonturen des zu bestückenden Motorblockes abgestimmt ist.

Die Trägerplatte 12 umfaßt mehrere Durchbrüche für die Brennräume 14, 15, den Durchlaß von Öl 16 oder Kühlwasser 18. Ferner sind auf der Trägerplatte 12 in Form von doppelten oder einfachen Dichtungslippen elastomere Dichtungselemente 20 aufgebracht, hier aufgespritzt, die sich im wesentlichen ringsum und benachbart zum peripheren Rand der Trägerplatte 12 erstrecken und ferner Abschnitte aufweisen, die Öl und Kühlmittelströme voneinander trennen. Im vorliegenden Fall ist vorgesehen, daß alle Öl führenden Ströme von elastomeren Dichtlippen 20 umfangen bzw. dichtend umgeben werden. Die Kühlmittelströme werden von Teilen der Dichtlippen 20 nach außen hin abgedichtet, während die Abdichtung gegenüber den Brennräumen 14, 15 von Brennraumeinfassungen 22, 24 mitübernommen wird.

Die Brennräume 14 und 15 sind von Brennraumeinfassungen 22, 24 umgeben, welche im vorliegenden Fall einstückig mit der Trägerplatte 12, die hier aus einem Metallblech hergestellt ist, ausgebildet sind. Die Brennraumeinfassungen weisen auf einer Seite einen vom Brennraum wegweisenden Lappen 19 auf, der zylinderkopfseitig einen im Zylinderkopf eingepaßten Wirbelkammereinsatz abdeckt.

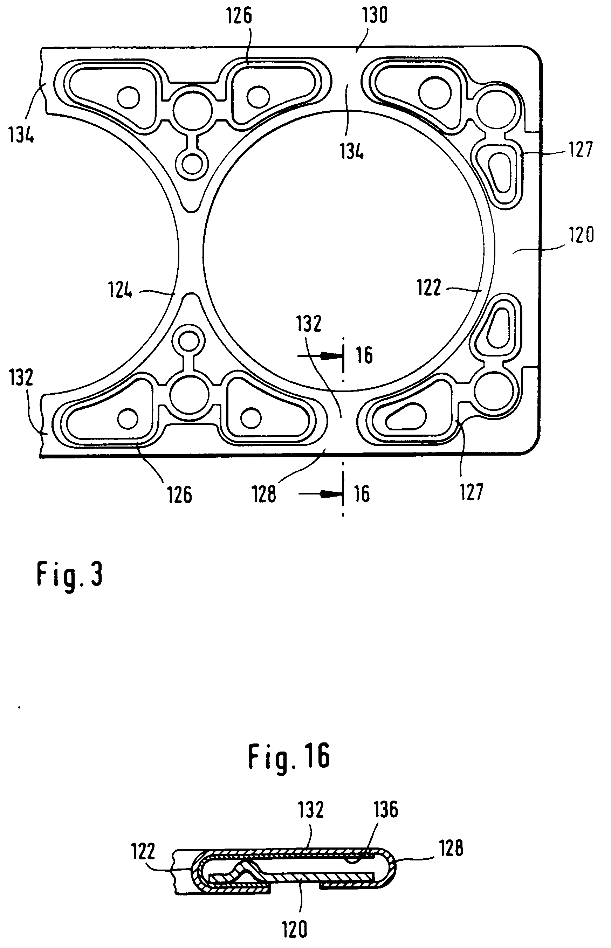

Die Bezugszeichen 17 bezeichnen Schraubendurchgangslöcher. Eine nähere Beschreibung der Brennraumeinfassungen bzw. der Elastomer-Dichtelemente erfolgt weiter unten im Zusammenhang mit der Beschreibung der Fig. 3 bis 7 bzw. 8 bis 14.

Ferner sind am äußeren Rand der erfindungsgemäßen Zylinderkopfdichtung Abstützelemente in Form von U-förmig gebogenen Blechen 26 aufgesetzt, welche durch die Klemmwirkung des U-Profils an der Trägerplatte sowie eine teilweise Verprägung (nicht dargestellt) gehalten sind.

Fig. 2 zeigt eine weitere erfindungsgemäße Zylinderkopfdichtung 30 mit einer metallischen Trägerplatte 31, aus einem ungelochten Blech hergestellt. An der Trägerplatte 31 sind Brennraumeinfassungen 32, 34 über radial von den Brennraumeinfassungen 32, 34 abstehende Laschen 36 befestigt, welche mit der Trägerplatte 31 beispielsweise verklebt oder punktgeschweißt sind.

Die Brennraumeinfassungen 32, 34 sind in Ausstanzungen 37, 38 der Trägerplatte 31 eingesetzt, die einen größeren Durchmesser aufweisen als die Brennraumeinfassungen 32, 34 selber. An diesem Beispiel wird die alleinige Halterungsfunktion der Trägerplatte für die einzelnen Elemente der Zylinderkopfdichtung, wie Brennraumeinfassungen, besonders deutlich.

Die Trägerplatte 31 weist ferner Durchbrüche für Kühlmittelströme 40 auf sowie Schmiermitteldurchlässe 42 (nur einer gezeigt). Die Durchbrüche 40 dienen gleichzeitig der Kalibrierung der Kühlmittelströme.

Ferner sind an der Oberfläche der Trägerplatte 31 Elastomer-Dichtungselemente in Form von Dichtlippen 44 angeordnet, die wie im Ausführungsbeispiel der Fig. 1 im wesentlichen im peripheren Bereich der Trägerplatte 31 ringsum verlaufen und im zusammengebauten Zustand den Motorblock und Zylinderkopf nach außen hin abdichten. Ferner umfaßt die Dichtlippe 44 Bereiche 46, in denen die Öldurchlässe 42 gesondert abgedichtet, insbesondere vom Kühlwasserstrom getrennt werden.

Bemerkenswert ist bei den Ausführungsbeispielen in Fig. 1 und 2, daß der Kühlwasserstrom keiner gesonderen Abdichtung bedarf. Dieser wird gegenüber den Brennräumen vielmehr durch die Brennraumeinfassungen 22, 24 bzw. 32, 34 abgedichtet.

Die in Fig. 2 gezeigte erfindungsgemäße Flachdichtung weist ebenso wie die in Fig. 1 gezeigte Ausführungsform am peripheren Rand der Trägerplatte 31 aufgesetzte Abstützelemente 48 auf, welche aus zu U-förmigen Profilen gebogenen Blechen gefertigt sind. Diese Abstützelemente 48 sind jeweils benachbart zu Schraubendurchgangslöchern 50 angeordnet und definieren benachbart zu diesen Krafteinleitungsstellen den einzuhaltenden Abstand zwischen der Oberfläche des Motorblocks und der gegenüberliegenden Oberfläche des Zylinderkopfes, der eine ideale Verpressung der Brennraumeinfassungen 32, 34 gewährleistet.

Fig. 3 zeigt eine weitere Ausführungsform der erfindungsgemäßen Flachdichtung mit einer Trägerplatte 120, Brennraumeinfassungen 122, 124, Elastomer-Dichtungselementen 126, 127 und Abstützelementen 128, 130. Das Besondere dieser Ausführungsform liegt in der einstückigen Ausbildung der Brennraumeinfassungen 122, 124 mit den Abstützelementen 128, 130. Über einen Steg 132, 134 sind die Abstützelemente 128 bzw. 130 an den Brennraumeinfassungen gehalten und können gemeinsam mit diesen in einem Arbeitsschritt montiert werden. Bei der Montage werden die innen liegenden Ränder der Brennraumeinfassungen umgebördelt und die über die Trägerplatte 120 hinausstehenden Teile der Abstützelemente (in Fig. 3 nicht sichtbar) werden um den Rand der Trägerplatte umgelegt.

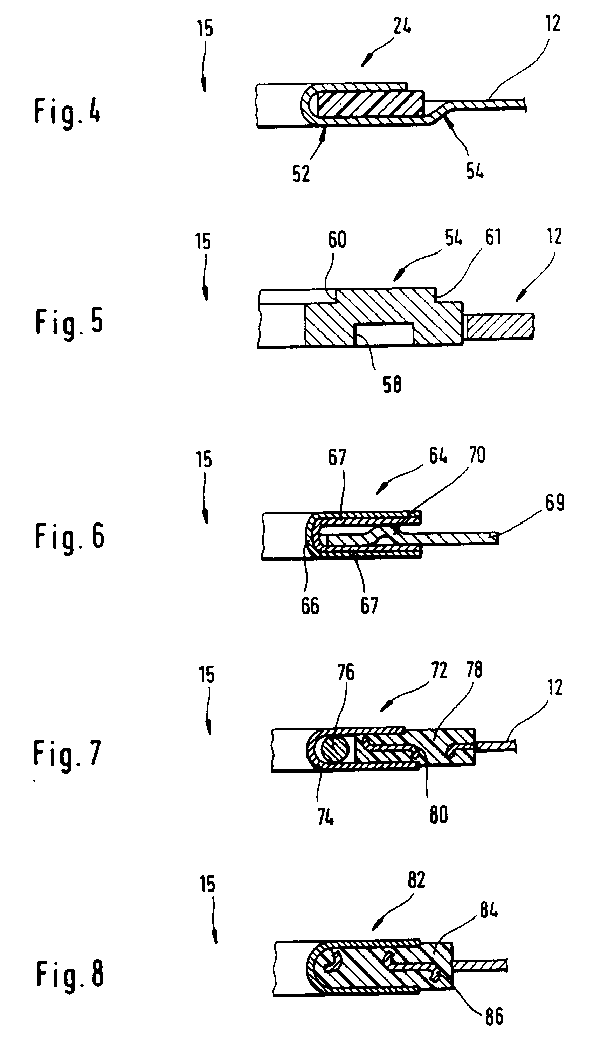

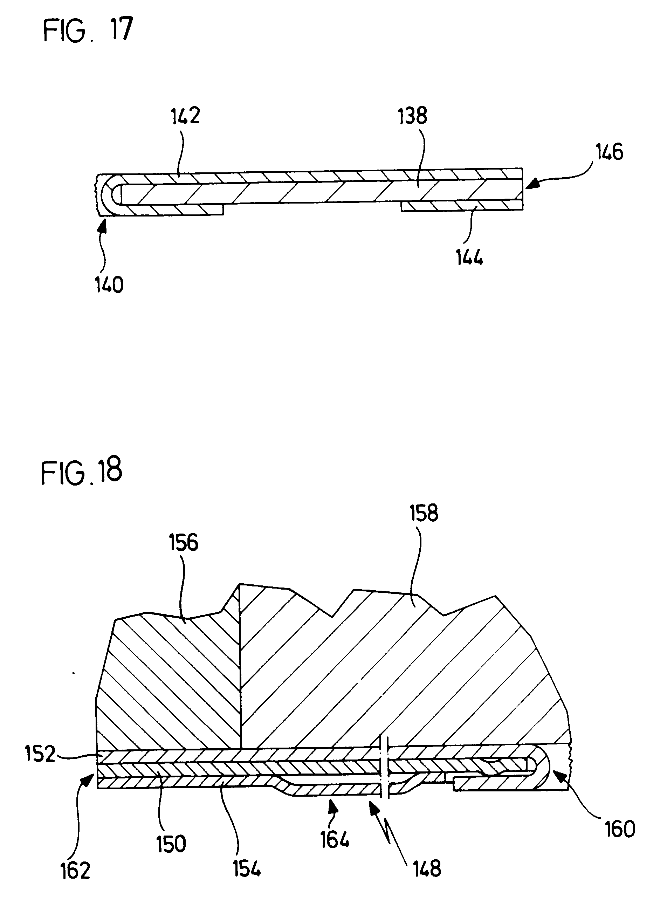

Die dabei erhaltene Struktur zeigt die Schnittdarstellung in Fig. 16 schematisch. Zur Verdeutlichung des Aufbaus sind die Relationen, Dicken etc. der einzelnen Bauteile nicht maßstäblich gezeichnet. Zur Variation der Dicke der Dichtung ist unterhalb der Brennraumeinfassung eine Blechlage mit U-förmigem Profil eingelegt, deren oberseitiger Schenkel länger gewählt ist und sich im Bereich des Steges 132 bis nahezu an den Trägerplattenrand erstreckt. Damit ergibt sich eine größere Dicke der Dichtung am Brennraumrand und eine geringere am Dichtungsrand, der hier gleichzeitig der Bereich der Abstützung darstellt.Selbstverständlich kann anstelle des rings um den Brennraum gesickten Trägerblechs 120 jede andere Ausgestaltung der Brennraumeinfassung gewählt werden. Es sei hier nur beispielhaft auf die in den Fig. 4 bis 8 gezeigten und nachfolgend beschriebenen Ausführungsbeispielen verwiesen.

Fig. 4 zeigt einen Schnitt durch die Brennraumeinfassung 24 aus Fig. 1, wobei hier deutlich ist, daß die Brennraumeinfassung einen metallischen Ring 52 umfaßt, welcher die Trägerplatte gegenüber dem Brennraum 15 begrenzt. Dieser metallische Ring weist ein U-förmiges, zum Brennraum 15 hin geschlossenes Profil auf und ist über einen abgekröpften Bereich 54 mit der Trägerplatte 12 verbunden. In der Herstellung wird so verfahren, daß die Aussparung in der Trägerplatte kleiner gehalten wird als dies für die Brennraumöffnung 15 notwendig ist, wobei dann nachfolgend der nach innen zum Brennraum 15 weisende Rand der Trägerplatte 12 umgebördelt und auf sich selber zurückgefaltet wird zur Erzielung des U-förmigen Profiles.

Im Innern des U-förmigen Profiles ist im vorliegenden Ausführungsbeispiel an sich bekanntes Weichstoffdichtungsmaterial angeordnet, das einem Setzverlust der Brennraumeinfassung während der Lebensdauer der Zylinderkopfdichtung entgegenwirkt.

Fig. 5 zeigt eine alternative Ausführungsform für einen Metallring in Form eines massiven Ringes 56, welcher auf einer Seite eine ringsumlaufende Nut 58 aufweist. Auf der zur Nut 58 gegenüberliegenden Seite sind am inneren und äußeren Rand des Ringes 54 ringsumlaufende Rücksprünge 60, 61 vorgesehen, welche eine Schwächung des massiven Materials des Rings 54 bewirken, dergestalt, daß er beim Verpressen im montierten Zustand der Zylinderkopfdichtung eine ausreichende Nachgiebigkeit aufweist, um sich an die jeweils anliegenden Flächen von Zylinderkopf und Motorblock ausreichend anzupassen.

Der Ring 54 kann an der Trägerplatte 12 über anzuformende Laschen oder dergleichen (nicht dargestellt) befestigt sein oder einfach im Preßsitz in einer Ausnehmung der Platte 12 gehalten sein. Wichtig ist lediglich, daß die Brennraumeinfassung, hier der Ring 54, für die Montage eine gute Zentrierung für den Brennraum 15 erhalten und bei der Handhabung der Zylinderkopfdichtungen sicher in der Trägerplatte 12 fixiert sind.

Fig. 6 zeigt eine weitere mögliche Variante einer Brennraumeinfassung 64, wobei ein metallener Ring 66 mit einem U-förmigen, zum Innenradius hin geschlossenen Profil einen aus Flachmaterial hergestellten Einsatzring 67 aufnimmt. Es wird damit ein sandwichartiger Aufbau von fünf Ringlagen gebildet, wobei der im Querschnitt U-förmige Ring 67 zwischen den Schenkeln einen mit einer ringsumlaufenden Sicke 70 versehenen Bereich der Trägerplatte 69 hält. Die Trägerplatte 69 wird hier vorteilhafterweise aus Federstahl hergestellt, so daß die Brennraumeinfassung während des Betriebs des Motors und der Belastung der Zylinderkopfdichtung einen ausreichenden Rückfederungseffekt aufweist.

Die Sicke 70 dient der Versteifung der Brennraumeinfassung und der Erhöhung der Rückfederkraft der dem Brennraum abgewandten Seite, um eine sichere Dichtungsfunktion der Brennraumeinfassung 64 während der Beanspruchung der Zylinderkopfdichtung zu gewährleisten.

Fig. 7 zeigt eine weitere Variante einer Brennraumeinfassung 72, bei der ebenfalls ein Metallring 74 mit U-Profil die Begrenzung gegenüber dem Brennraum 15 übernimmt. Bei diesem Ausführungsbeispiel ist der Hohlraum des U-Profils des Metallrings 74 mit einem im Querschnitt runden Ring 76 in Form eines Drahtes oder Litze sowie zum offenen Ende des Profiles hin mit einer Weichstoffmasse 78 gefüllt, in die zur Verstärkung eine gelochte Metalleinlage 80 eingelegt ist. Die Verbindung mit der Trägerplatte 12 läßt sich, wie zuvor beschrieben, bewerkstelligen, wobei radial nach außen stehende Laschen im Prinzip durch die gelochte Metalleinlage 80 gebildet werden können (nicht dargestellt).

Fig. 8 zeigt schließlich eine weitere Ausbildung einer Brennraumeinfassung 82, welche vollständig mit einer Weichstoffdichtungsmasse 84 gefüllt ist, welche wiederum zur Verstärkung eine gelochte Metalleinlage 86 eingebettet enthält.

Selbstverständlich sind die Variationsmöglichkeiten für Brennraumeinfassungen bei den erfindungsgemäßen Zylinderkopfdichtungen nicht auf vorgenannte Beispiele beschränkt, vielmehr zeigen diese, daß die Brennraumeinfassungen an jede auch nur erdenkliche Anforderung optimal angepaßt werden können, unabhängig von der sonstigen Ausbildung der Zylinderkopfdichtung.

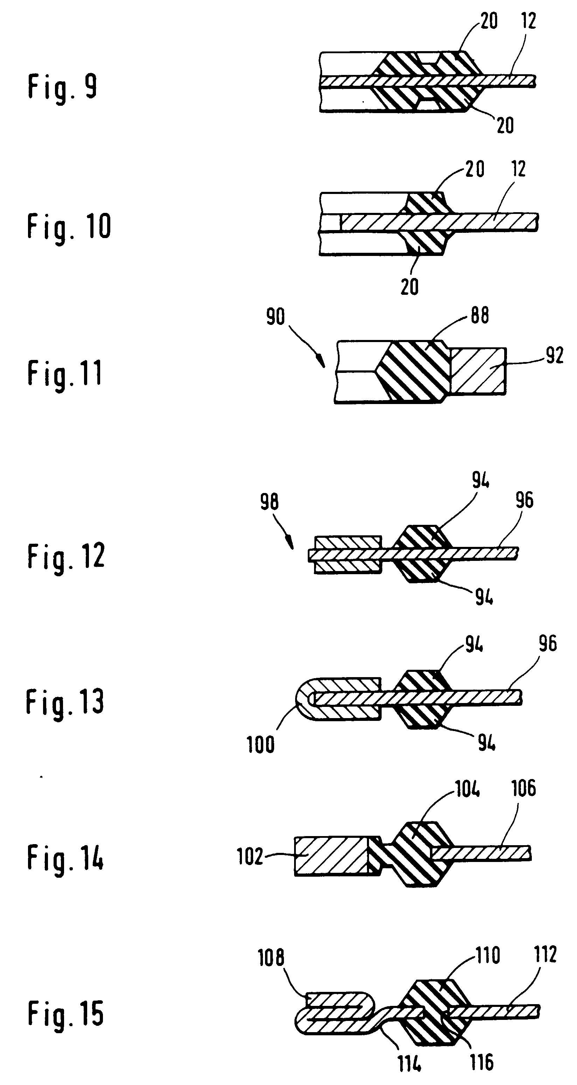

In den Fig. 9 bis 15 sind verschiedene Ausbildungsformen der Elastomer-Dichtungselemente und/oder von Abstützelementen beschrieben.

Fig. 9 zeigt einen Ausschnitt der erfindungsgemäßen Flachdichtung gemäß Fig. 1 in Schnittansicht, wobei der genauere Aufbau der auf der Trägerplatte 12 aufgespritzen Dichtungslippe 20 hier die Form einer Doppelrippe aufweist. Das verwendete Elastomermaterial kann ganz speziell auf die Erfordernisse des einzelnen Motors bzw. der einzelnen abzudichtenden Fluidströme ausgelegt werden, wobei häufig Gummimaterialien gute Abdichtergebnisse erzielen.

Bei der Auswahl der Elastomere für die Dichtungselemente braucht nur auf die Erfordernisse der Flüssigkeitsabdichtung und der Resistenz gegenüber Kühlmittel und Schmiermittel geachtet werden, während spezielle Temperaturbeständigkeit im Anforderungsprofil entfällt.

Fig. 10 zeigt eine weitere Schnittansicht durch ein Dichtungselement aus elastomerem Material, wobei bei diesem Ausführungsbeispiel eine einfache Dichtlippe ausreichend war.

Fig. 11 zeigt einen Sonderfall eines Dichtungselementes 88, welches auf der einen Seite zu einem Durchlaß 90 hin einen abdichtenden Rand bildet, während es auf der dem Durchlaß 90 gegenüberliegenden Seite an ein Abstützelement 92 angespritzt ist.

Im weiteren Verlauf des Dichtungselementes 88 wird dieses selbstverständlich auch an eine Trägerplatte (hier nicht dargestellt) angespritzt sein und somit zu einer Verbindung zwischen Abstützelement 92 und der Trägerplatte der erfindungsgemäßen Zylinderkopfdichtung führen. Aufgrund des erfindungsgemäßen Konzeptes der Modularisierung der Zylinderkopfdichtung und der Beschränkung der Funktion der Trägerplatte auf die einer Montagehilfe ergeben sich selbst bei solchen Konstruktionen auch bei einer Belastung der Zylinderkopfdichtung im Betrieb des Motors keinerlei Probleme.

Fig. 12 zeigt schließlich eine Schnittansicht durch ein Dichtungselement 94, das im wesentlichen dem Aufbau des Dichtungselementes aus Fig. 9 entspricht, wobei auch in diesem Falle das Dichtungselement auf eine Trägerplatte 96 aufgespritzt ist. Der periphere Teil der Trägerplatte 96 trägt ein Abstützelement 98, welches aus an der Ober- und Unterseite der Trägerplatte 96 angeordneten, aus einem Flachmaterial gearbeiteten, Teilen besteht.

Eine alternative Ausführungsform hierzu zeigt Fig. 13, bei der ein Abstützelement 100 in Form eines zu einem U-förmigen Profil gebogenen Blechstreifens über den peripheren Rand der Trägerplatte 96 geschoben ist.

Eine weitere Alternative ist in Fig. 14 gezeigt, bei der, ähnlich wie in Fig. 11, ein Abstützelement 102 über ein Dichtungselement 104 an einer Trägerplatte 106 gehalten ist. Die Kontaktfläche zwischen dem Dichtelement 104 und dem Abstützelement 102 ist für eine sichere Halterung des Abstützelementes 102 ausreichend, während die Stirnfläche der Trägerplatte 106 hierfür nur ungenügend Halt bieten würde. Deshalb umgreift das Dichtungselement 104 zu einem geringen Anteil den peripheren Rand der Trägerplatte 106.

Eine weitere Alternative der Ausbildung von Abstützelementen zeigt Fig. 15, wobei ein Abstützelement 108 bestehend aus einem auf sich selbst rückgefalteten Trägerplattenmaterial einstückig mit der Trägerplatte 112 ausgebildet ist und mit dieser über den abgekröpften Bereich 114 angeschlossen ist. Fig. 15 zeigt noch ein weiteres Detail, das vorteilhafterweise zur Befestigung der Elastomer-Dichtungselemente 110 zur Anwendung kommt. Entlang der Spur der Dichtungselemente wird in gewissen Abständen eine Perforation 116 der Trägerplatte 112 vorgesehen, durch die das Elastomermaterial hindurchdringen kann und so eine mechanische Verbindung der Elastomerdichtungselemente 110 auf der Ober- und Unterseite der Trägerplatte 112 bildet. Solchermaßen befestigte Elastomerdichtelemente halten auch großen Ablösungskräften stand.

Anknüpfend an die Beschreibung der Fig. 3 und 16 seien im folgenden anhand der Fig. 17 und 18 weitere alternative Flachdichtungskonstruktionen im Brennkammerbereich vorgestellt.

Fig. 17 zeigt eine Flachdichtung mit einer planen Trägerplatte 138, welche vom Rand 146 der Dichtung bis zum Brennraum reicht. Auf die Trägerplatte 138 ist großflächig eine Blechlage 142 gelegt, welche sich ebenfalls vom Rand 146 der Dichtung bis zum Brennraum erstreckt, wo die Blechlage 142 um die Trägerplatte 138 umgebördelt ist und eine Brennraumeinfassung 140 bildet. Im Bereich des Dichtungsrandes 146 ist auf der der Blechlage 142 gegenüberliegenden Seite der Trägerplatte 138 ein Abstützblech 144 angeordnet, welches eine etwas geringere Dicke, der Dickenunterschied beträgt beispielsweise 0,1 mm, aufweist und zusammen mit der Trägerplatte 138 sowie der Blechlage 142 den Abstand von Motorblock und Zylinderkopf im Abstützbereich definiert. Typischerweise beträgt die Dicke der Blechlage 142 ca. 0,5 mm und die der Trägerplatte 138 ca. 0,4 mm. Die Dicke des Abstützbleches 144 beträgt bei dem genannten Dickenunterschied dann ebenfalls ca. 0,4 mm.

Am Brennraumrand ergibt sich eine um den Dickenunterschied von Blechlage 142 und Abstützblech 144 vergrößerte Dicke der Dichtung, was zu einem höheren Preßdruck in diesem kritischen Bereich führt.

Die an diesem Beispiel gezeigte einfache Auslegung der Brennraumeinfassung 140 ist nicht bei allen Motoren, jedoch bei den weniger kritischen, mit gutem Erfolg einsetzbar. Muß die Brennraumeinfassung höheren Gasdrucken standhalten, dann läßt sich die Brennraumeinfassung 140 dadurch verbessern, daß man den von der Brennraumeinfassung 140 abgedeckten Bereich der Trägerplatte 138 mit einer ringsumlaufenden Sicke versieht (nicht dargestellt, vgl. aber zum Beispiel Fig. 16).

Die in Fig. 18 gezeigte erfindungsgemäße Flachdichtung 148 umfaßt neben einer Trägerplatte 150 eine Blechlage 152 sowie ein großflächig ausgebildetes Abstützblech 154, welches auf der zur Blechlage 152 gegenüberliegenden Seite der Trägerplatte 150 angeordnet ist.

Die Konstruktion ist vergleichbar mit der in Fig. 17 gezeigten, jedoch liegt hier eine besondere Ausbildung der Dichtung in dem mit einer im Zylinderkopf 156 eingesetzten Wirbelkammer 158 überlappenden Bereich vor. Eine Brennraumeinfassung 160 wird durch ein Umbördeln der Blechlage 152 um die im Brennraumbereich gesickte Trägerplatte 150 gebildet. Aufgrund der größeren Dicke der Blechlage 152 gegenüber dem Abstützblech 154 ergibt sich ein höherer Preßdruck an der Brennraumeinfassung.

Das Abstützblech erstreckt sich im Bereich der Wirbelkammer vom Rand 162 der Dichtung bis nahe an den umgebördelten Teil der Blechlage 152. Ein Teilbereich 164 des Abstützbleches 154, der mit der Wirbelkammer 158 überlappt, ist mit zwei Halbsicken versehen, welche zu einer Abstützung der Wirbelkammer 158 am Motorblock (nicht gezeigt) in einem vom Brennraumrand entfernten Bereich führen. Diese zusätzliche Abstützung der Wirbelkammer 158 fixiert diese besonders gut im Zylinderkopf 156 in definierter Lage, insbesondere auch bei thermischen Wechselbelastungen.

## Patentansprüche

1. Flachdichtung (10) für Verbrennungskraftmaschinen für die Montage zwischen sich gegenüberliegenden Flächen eines Motorblocks und eines Zylinderkopfes mit einer Trägerplatte (12), welche zu den Brennräumen des Motorblocks ausgerichtete Durchbrüche (14, 15) sowie Durchbrüche (16, 17) für den Durchtritt von Kühlflüssigkeits- und Schmiermittelströmen umfaßt, mit Brennraumeinfassungen (22, 24) und hiervon verschiedenen Dichtungselementen (20) aus Elastomer-Material, welchletztere Abschnitte aufweisen, welche die Kühlflüssigkeitsströme und die Schmiermittelströme voneinander trennen und dichtend umgeben, sowie mit einer Abstützung (26) zur Begrenzung der Kompression der Dichtungselemente (20) aus Elastomermaterial, welche den Abstand zwischen den sich gegenüberliegenden Flächen von Motorblock und Zylinderkopf definiert, wobei die Trägerplatte (12) im wesentlichen ausschließlich als Halterung der einzelnen Komponenten der Flachdichtung in der Dichtungsebene in einem für die Montage vorgegebenen Abstand voneinander ausgebildet ist, wobei die Brennraumeinfassungen (22, 24) verpreßbar sind und wobei die Abstützung Abstützelemente (26) umfaßt, welche den Abstand zwischen den sich gegenüberliegenden Flächen von Motorblock und Zylinderkopf derart definieren, daß der Abstand im wesentlichen die Dicke der Brennraumeinfassungen (22, 24) im ideal verpreßten Zustand vorgibt und gleichzeitig etwas geringer ist als die Dicke der Flachdichtung an den mit Elastomer-Dichtungselementen (20) beaufschlagten Bereichen.

2. Flachdichtung nach Anspruch 1, **dadurch gekennzeichnet**, daß die Brennraumeinfassungen (54) einen metallischen Einfassungsring (56) umfassen.

3. Flachdichtung nach Anspruch 2, **dadurch gekennzeichnet**, daß der metallische Ring (56) aus massivem Material hergestellt ist und an seiner Ober- oder Unterseite eine ringsumlaufende Nut (58) umfaßt.

4. Flachdichtung nach Anspruch 2, **dadurch gekennzeichnet**, daß der metallische Ring (52) ein U-förmiges, auf der dem Brennraum (15) abgewandten Seite offenes Profil aufweist.

5. Flachdichtung nach Anspruch 4, **dadurch gekennzeichnet**, daß der metallische Ring (52) mit einem der Schenkel des U-förmigen Profils mit der Trägerplatte (12) über einen abgekröpften Teil (54) verbunden ist.

6. Flachdichtung nach Anspruch 4 oder 5, **dadurch gekennzeichnet**, daß der metallische Ring (52) mit der Trägerplatte (12) einstückig ausgebildet ist.

7. Flachdichtung nach Anspruch 2 bis 5, **dadurch gekennzeichnet**, daß der Ring mittels radial abstehender, mit der Trägerplatte überlappenden Laschen verbunden ist.

8. Flachdichtung nach Anspruch 1 bis 7, **dadurch gekennzeichnet**, daß die Brennraumeinfassung (24) einen radial nach außen abstehenden Randbereich (54) umfaßt, welcher gegebenenfalls einstückig als Fortsetzung eines Schenkels des U-förmigen Profils ausgebildet ist.

9. Flachdichtung nach Anspruch 4 bis 8, **dadurch gekennzeichnet**, daß das U-förmige Profil des Rings (52) mit einer Weichstoffdichtungsmasse gefüllt ist.

10. Flachdichtung nach Anspruch 4 bis 9, **dadurch gekennzeichnet**, daß die Brennraumeinfassung (72) einen metallischen Einsatzring (80) aus gegebenenfalls gelochtem Flachmaterial umfaßt, welcher konzentrisch zu dem Einfassungsring und zwischen den Schenkeln des U-förmigen Profils (74) angeordnet ist.

11. Flachdichtung nach Anspruch 10, **dadurch gekennzeichnet**, daß der Einsatzring (69) in seinem mit dem Einfassungsring (66) überlappenden Teil eine ringsumlaufende Sicke (70) umfaßt.

12. Flachdichtung nach Anspruch 10 oder 11, **dadurch gekennzeichnet**, daß der metallische Einsatzring (86) zumindest im Bereich der Überlappung mit dem U-förmigen Profil (82) des Einfasungsringes in Weichstoffdichtungsmaterial (84) eingebettet ist.

13. Flachdichtung nach Anspruch 9 oder 12, **dadurch gekennzeichnet**, daß das U-förmige Profil (82) im wesentlichen vollständig von dem Weichstoffmaterial (84) ausgefüllt ist.

14. Flachdichtung nach Anspruch 4 bis 12, **dadurch gekennzeichnet**, daß das U-förmige Profil (74) mit einer Draht- oder Metallitzeneinlage (76) oder einer Graphitfüllung (76), insbesondere aus expandiertem Graphit, zumindest teilweise gefüllt ist.

15. Flachdichtung nach Anspruch 14, **dadurch gekennzeichnet**, daß die Graphitfüllung (76) Ringform aufweist und benachbart zum geschlossenen Ende des U-förmigen Profils (74) angeordnet ist.

16. Flachdichtung nach einem der voranstehenden Ansprüche, **dadurch gekennzeichnet**, daß die Elastomer-Dichtungselemente (20) rippenförmig an der Ober- und Unterseite der Trägerplatte (12) aufgebracht, insbesondere aufgespritzt oder aufgeklebt sind, und gegebenenfalls über Perforationslöcher (116) in der Trägerplatte miteinander verbunden sind.

17. Flachdichtung nach Anspruch 1 bis 15, **dadurch gekennzeichnet**, daß die Elastomer-Dichtungselemente (104) an die Trägerplatte (106) angespritzt sind und gegebenenfalls einen Randbereich der Trägerplatte (106) umgreifen.

18. Flachdichtung nach Anspruch 16 oder 17, **dadurch gekennzeichnet**, daß die Elastomer-Dichtungselemente (20) die Form einer Doppelrippe aufweisen.

19. Flachdichtung nach einem der voranstehenden Ansprüche, **dadurch gekennzeichnet**, daß die Abstützelemente (98) aus Flachmaterial hergestellt und als getrennte Teile an der Ober- und Unterseite der Trägerplatte befestigt sind.

20. Flachdichtung nach einem der Ansprüche 1 bis 18, **dadurch gekennzeichnet**, daß die Abstützelemente (108) aus peripheren, auf sich selbst ein- oder mehrfach zurückgefalteten Teilen der Trägerplatte (112) gebildet sind.

21. Flachdichtung nach einem der Ansprüche 1 bis 18, **dadurch gekennzeichnet**, daß die Abstützelemente (100) aus U-Profilblechen gebildet und auf den peripheren Rand der Trägerplatte (96) aufgesteckt sowie gegebenenfalls zusätzlich befestigt sind.

22. Flachdichtung nach einem der Ansprüche 1 bis 18, **dadurch gekennzeichnet**, daß die Abstützelemente (102) als massive quaderförmige Teile ausgebildet und über Elastomerbrücken (104), die gegebenenfalls gleichzeitig Dichtelemente sein können, am Trägerplattenrand gehalten sind.

23. Flachdichtung nach einem der voranstehenden Ansprüche, **dadurch gekennzeichnet**, daß die Abstützelemente (26) an der Trägerplatte (12) außerhalb der mit Kühlflüssigkeit und/oder Schmiermittel in Kontakt stehenden Bereichen angeordnet sind.

24. Flachdichtung nach einem der voranstehenden Ansprüche, **dadurch gekennzeichnet**, daß die Abstützung (142) einstückig mit Brennraumeinfassung (140) ausgebildet ist.

25. Flachdichtung nach einem der Ansprüche 1 bis 24, **dadurch gekennzeichnet**, daß die Trägerplatte (12) einstückig mit einem oder mehreren Dichtungselementen (52) ausgebildet ist.

26. Flachdichtung nach einem der Ansprüche 1 bis 25, **dadurch gekennzeichnet**, daß die Dicke aller Lagen am Brennraumrand (160) größer ist als im Bereich der Abstützung.

## Claims

1. A flat gasket (10) for combustion engines for mounting between opposite faces of an engine block and a cylinder head having a support plate (12), which comprises openings (14, 15) aligned with the combustion chambers of the engine block and also openings (16, 17) for the passage of streams of coolant and lubricant, having combustion chamber borders (22, 24) and sealing elements (20) distinct therefrom made of elastomer material, the latter of which comprise portions which separate the streams of coolant and lubricant from one another and tightly surround them, and also having a support (26) for limiting the compression of the sealing elements (20) made of elastomer material, which define the distance between the opposite faces of the engine block and cylinder head, whereby the support plate (12) is substantially exclusively constructed as a mounting for the individual components of the flat gasket in the sealing plane at a distance from one another predetermined for assembly, whereby the combustion chamber borders (22, 24) are compressible and whereby the support comprises support elements (26), which define the distance between the opposite faces of engine block and cylinder head so that the distance substantially predetermines the thickness of the combustion chamber borders (22, 24) in the ideally compressed state and at the same time is slightly less than the thickness of the flat gasket at the regions provided with elastomer sealing elements (20).

2. A flat gasket according to Claim 1,
**characterised in that** the combustion chamber borders (54) comprise a metallic border ring (56).

3. A flat gasket according to Claim 2,
**characterised in that** the metallic ring (56) is manufactured from solid material and at its upper or under side comprises a circumferential groove (58).

4. A flat gasket according to Claim 2,
**characterised in that** the metallic ring (52) comprises a U-shaped profile open on the side remote from the combustion chamber (15).

5. A flat gasket according to Claim 4,
**characterised in that** the metallic ring (52) is connected via a bent part (54) by one of the arms of the U-shaped profile to the support plate (12).

6. A flat gasket according to Claim 4 or 5,
**characterised in that** the metallic ring (52) is constructed in one piece with the support plate (12).

7. A flat gasket according to Claim 2 to 5,
**characterised in that** the ring is connected by means of tongues radially protruding and overlapping with the support plate.

8. A flat gasket according to Claim 1 to 7,
**characterised in that** the combustion chamber border (24) comprises a radially outwardly protruding edge region (54), which where appropriate is constructed in one piece as a continuation of an arm of the U-shaped profile.

9. A flat gasket according to Claim 4 to 8,
**characterised in that** the U-shaped profile of the ring (52) is filled with a soft material sealing compound.

10. A flat gasket according to Claim 4 to 9,
**characterised in that** the combustion chamber border (72) comprises a metallic insert ring (80) made where appropriate of perforated flat material, which is disposed concentrically to the border ring and between the arms of the U-shaped profile (74).

11. A flat gasket according to Claim 10,
**characterised in that** the insert ring (69) comprises a circumferential bead (70) in its part overlapping with the border ring (66).

12. A flat gasket according to Claim 10 or 11,
**characterised in that** the metallic insert ring (86) is embedded in soft sealing material (84) at least in the region of the overlap with the U-shaped profile (82) of the border ring.

13. A flat gasket according to Claim 9 or 12,
**characterised in that** the U-shaped profile (82) is substantially completely filled with the soft material (84).

14. A flat gasket according to Claim 4 to 12,
**characterised in that** the U-shaped profile (74) is at least partially filled with a wire or metal stranded wire insert (76) or a graphite filling (76), in particular of expanded graphite.

15. A flat gasket according to Claim 14,
**characterised in that** the graphite filling (76) comprises a ring shape and is disposed adjacent to the closed end of the U-shaped profile (74).

16. A flat gasket according to one of the preceding Claims,
**characterised in that** the elastomer sealing elements (20) are mounted, in particular injected or stuck, in the shape of ribs on the upper side and under side of the support plate (12), and where appropriate are connected to one another via perforation holes (116) in the support plate.

17. A flat gasket according to Claim 1 to 15,
**characterised in that** the elastomer sealing elements (104) are injected onto the support plate (106) and where appropriate engage around an edge region of the support plate (106).

18. A flat gasket according to Claim 16 or 17,
**characterised in that** the elastomer sealing elements (20) have the form of a double rib.

19. A flat gasket according to one of the preceding Claims,
**characterised in that** the support elements (98) are manufactured from flat material and are attached as separate parts to the upper side and under side of the support plate.

20. A flat gasket according to one of Claims 1 to 18,
**characterised in that** the support elements (108) are formed from peripheral parts of the support plate (112) folded back onto themselves once or several times.

21. A flat gasket according to one of Claims 1 to 18,
**characterised in that** the support elements (100) are formed of U-profile metal sheets and are placed onto the peripheral edge of the support plate (96) and also where appropriate are additionally attached.

22. A flat gasket according to one of Claims 1 to 18,
**characterised in that** the support elements (102) are constructed as solid parallelepiped-shaped parts and are retained at the edge of the support plate via elastomer bridges (104), which where appropriate may at the same time be sealing elements.

23. A flat gasket according to one of the preceding Claims,
**characterised in that** the support elements (26) are disposed at the support plate (12) outside the regions in contact with coolant and/or lubricant.

24. A flat gasket according to one of the preceding Claims,
**characterised in that** the support (142) is constructed in one piece with the combustion chamber border (140).

25. A flat gasket according to one of Claims 1 to 24,
**characterised in that** the support plate (12) is constructed in one piece with one or more sealing elements (52).

26. A flat gasket according to one of Claims 1 to 25,
**characterised in that** the thickness of all layers at the combustion chamber edge (160) is greater than in the region of the support.

## Revendications

1. Joint plat (10) pour des moteurs à combustion interne pour le montage entre des surfaces opposées d'un bloc moteur et d'une culasse de cylindre, comportant un plateau de support (12) qui comporte des traversées (14, 15) dirigées vers les chambres de combustion du bloc moteur, ainsi que des traversées (16, 17) pour le passage de courants de réfrigérants et de lubrifiants, présentant des encadrements (22, 24) des chambres de combustion et des éléments d'étanchement (20) en matière élastomère et différents de ces encadrements, qui présentent des tronçons qui séparent les courants de réfrigérant et les courants de lubrifiant les uns des autres et qui les entourent de façon étanche, et présentant un appui (26) pour limiter la compression des éléments d'étanchement (20) en matière élastomère, qui définit la distance entre les surfaces opposées du bloc moteur et de la culasse de cylindre, le plateau de support (12) étant réalisé sensiblement exclusivement sous forme d'une monture pour les composants individuels du joint plat dans le plan d'étanchement à une distance les uns des autres qui est prédéterminée pour le montage, et les encadrements (22, 24) des chambres de combustion peuvent être pressés, et l'appui comporte des éléments d'appui (26) qui définissent la distance entre les surfaces opposées du bloc moteur et de la culasse de telle sorte que la distance détermine sensiblement l'épaisseur des encadrements (22, 24) des chambres de combustion à l'état pressé de façon idéale et est simultanément légèrement inférieure à l'épaisseur du joint plat dans les régions sollicitées par les éléments d'étanchement (20) en élastomère.

2. Joint plat selon la revendication 1, caractérisé en ce que les encadrements (54) des chambres de combustion comportent un anneau d'encadrement métallique (56).

3. Joint plat selon la revendication 2, caractérisé en ce que l'anneau métallique (56) est fabriqué en un matériau massif et comporte sur sa face supérieure ou inférieure une gorge périphérique (58).

4. Joint plat selon la revendication 2, caractérisé en ce que l'anneau métallique (52) présente un profil en forme de U ouvert sur le côté détourné de la chambre de combustion (15).

5. Joint plat selon la revendication 4, caractérisé en ce que l'anneau métallique (52) est relié par l'un des bras du profil en forme de U au plateau de support (12) via une partie coudée (54).

6. Joint plat selon l'une ou l'autre des revendications 4 et 5, caractérisé en ce que l'anneau métallique (52) est réalisé en une seule pièce avec le plateau de support (12).

7. Joint plat selon l'une quelconque des revendications 2 à 5, caractérisé en ce que l'anneau est relié au moyen de pattes faisant radialement saillie et en chevauchement avec le plateau de support.

8. Joint plat selon l'une quelconque des revendications 1 à 7, caractérisé en ce que l'encadrement (24) de la chambre de combustion comporte une région de bordure (54) faisant saillie radialement vers l'extérieur, qui est en option réalisée en une seule pièce comme prolongement d'un bras du profil en forme de U.

9. Joint plat selon l'une quelconque des revendications 4 à 8, caractérisé en ce que le profil en forme de U de l'anneau (52) est rempli avec une masse d'étanchement en matière molle.

10. Joint plat selon l'une quelconque des revendications 4 à 9, caractérisé en ce que l'encadrement (72) de la chambre de combustion comporte un insert métallique annulaire (80), constitué en option en un matériau plat perforé, qui s'étend concentriquement par rapport à l'anneau d'encadrement et qui est agencé entre les bras du profil (74) en forme de U.

11. Joint plat selon la revendication 10, caractérisé en ce que l'insert annulaire (69) présente une moulure périphérique (70) sur sa partie qui chevauche l'anneau d'encadrement (66).

12. Joint plat selon l'une ou l'autre des revendications 10 et 11, caractérisé en ce que l'insert métallique annulaire (86) est noyé dans un matériau d'étanchement en matière molle (84) du moins dans la région du chevauchement avec le profil en forme de U (82) de l'anneau d'encadrement.

13. Joint plat selon l'une ou l'autre des revendications 9 et 12, caractérisé en ce que le profil en forme de U (82) est rempli sensiblement entièrement avec le matériau en matière molle (84).

14. Joint plat selon l'une quelconque des revendications 4 à 12, caractérisé en ce que le profil (74) en forme de U est rempli du moins partiellement avec une couche de fil ou de cordon métallique (76) ou avec un remplissage de graphite (76), en particulier un graphite expansé.

15. Joint plat selon la revendication 14, caractérisé en ce que le remplissage de graphite (76) présente une forme annulaire et est agencé au voisinage de l'extrémité fermée du profil (74) en forme de U.

16. Joint plat selon l'une quelconque des revendications précédentes, caractérisé en ce que les éléments d'étanchement (20) en élastomère sont appliqués sous forme de nervure sur la face supérieure et inférieure du plateau de support (12), et en ce qu'ils sont en particulier projetés ou collés, et en option reliés les uns aux autres via des trous de perforation (116) dans le plateau de support.

17. Joint plat selon l'une quelconque des revendications 1 à 15, caractérisé en ce que les éléments d'étanchement (104) en élastomère sont projetés sur le plateau de support (106), et entourent en option une région de bordure du plateau de support (106).

18. Joint plat selon l'une ou l'autre des revendications 16 et 17, caractérisé en ce que les éléments d'étanchement en élastomère (20) présentent la forme d'une nervure double.

19. Joint plat selon l'une quelconque des revendications précédentes, caractérisé en ce que les éléments d'appui (98) sont fabriqués en un matériau plat et fixés en tant que pièces séparées sur la face supérieure et inférieure du plateau de support.

20. Joint plat selon l'une quelconque des revendications 1 à 18, caractérisé en ce que les éléments d'appui (108) sont formés par des parties périphériques du plateau de support (112), qui sont repliées sur elles-mêmes une ou plusieurs fois.

21. Joint plat selon l'une quelconque des revendications 1 à 18, caractérisé en ce que les éléments d'appui (100) sont formés par des tôles à profil en U et sont enfichés, et en option additionnellement fixés, sur la bordure périphérique du plateau de support (96).

22. Joint plat selon l'une quelconque des revendications 1 à 18, caractérisé en ce que les éléments d'appui (102) sont réalisés sous forme de pièces massives parallélépipédiques et retenus sur la bordure du plateau de support via des ponts en élastomère (104), lesquels peuvent en option simultanément être des éléments d'étanchement.

23. Joint plat selon l'une quelconque des revendications précédentes, caractérisé en ce que les éléments d'appui (26) sont agencés sur le plateau de support (12) à l'extérieur des régions qui sont en contact avec le réfrigérant et/ou le lubrifiant.

24. Joint plat selon l'une quelconque des revendications précédentes, caractérisé en ce que l'appui (142) est réalisé en une seule pièce avec l'encadrement (140) de la chambre de combustion.

25. Joint plat selon l'une quelconque des revendications 1 à 24, caractérisé en ce que le plateau de support (12) est réalisé en une seule pièce avec un ou plusieurs éléments d'étanchement (52).

26. Joint plat selon l'une quelconque des revendications 1 à 25, caractérisé en ce que l'épaisseur de toutes les couches est supérieure au niveau de la bordure (160) de la chambre de combustion à celle dans la région de l'appui.
